# EUROPÄISCHE PATENTSCHRIFT

(11) **EP 2 536 986 B1**
(45) Veröffentlichungstag und Bekanntmachung des Hinweises auf die Patenterteilung: **03.12.2014**
(21) Anmeldenummer: 11704962.7
(22) Anmeldetag: 14.02.2011
(51) Int. Cl.: F25D 23/00, F25D 23/02, A47L 15/42, F25D 23/10

(54) **HAUSHALTSGERÄT**
DOMESTIC APPLIANCE
APPAREIL ÉLECTROMÉNAGER

(30) Priorität: 16.02.2010 DE 202010000209 U
(43) Veröffentlichungstag der Anmeldung: 26.12.2012
(73) Patentinhaber: Hettich-ONI GmbH & Co. KG, 32606 Vlotho (DE)
(72) Erfinder: KLEEMANN, Andreas, 32689 Kalletal (DE); THIELMANN, Eduard, 32791 Lage (DE); WALTEMATE, Dieter-Hermann, 32609 Hüllhorst (DE); BUSCHMANN, Alexander, 32049 Herford (DE)
(74) Vertreter: Kleine, Hubertus
(86) Internationale Anmeldenummer: PCT/EP2011/052154
(87) Internationale Veröffentlichungsnummer: WO 2011/101319

(56) Entgegenhaltungen:
- DE-U1- 20 306 043
- JP-A- 3 274 376
- JP-A- 5 010 068
- US-A1- 2004 056 573

## Beschreibung

Die vorliegende Erfindung betrifft ein in einem Möbelkorpus einbaubares Haushaltsgerät, insbesondere einen Kühlschrank gemäß dem Oberbegriff des Anspruchs 1.

Aus dem Stand der Technik ist es bekannt, solche Einbauhaushaltsgeräte, insbesondere Einbaukühlschränke, die in Möbeln eingebaut werden, mit einer zusätzlichen Möbelfrontplatte abzudecken. Die Möbelfrontplatte wird beispielsweise direkt an der Kühlschranktür befestigt, so dass die Kühlschranktür samt Möbelfrontplatte geöffnet und geschlossen werden kann. Eine andere Möglichkeit der Befestigung besteht darin, die Haushaltsgerätetür und die Möbelfrontplatte im Sinne eines sog. Schlepptürsystems jeweils mit einem Drehgelenk auszustatten. Das Öffnen und Schließen des Haushaltsgerätes erfolgt demzufolge über zwei unterschiedliche Drehachsen. Die Haushaltsgerätetür als Schlepptür bewegt sich während des Öffnens und des Schließens relativ zur Möbelfrontplatte.

Nachteilig ist hier, das mit der Schließbewegung der Haushaltsgerätetür und der Möbelfrontplatte je nach eingesetzter Kraft des Benutzers die Haushaltsgerätetür mit großer Wucht gegen den Rahmen des Haushaltsgerätes gedrückt wird und es dadurch zu einer unerwünschten Geräuschentwicklung kommen kann Aufgabe der vorliegenden Erfindung ist es, ein in einen Möbelkorpus einbaubares Haushaltsgerät bereit zu stellen, mit dem eine Verbesserung des Bewegungsablaufes bei der Bewegung der Haushaltsgerätetür und der Möbelfrontplatte bewirkt wird.

Diese Aufgabe wird durch ein Haushaltsgerät mit den Merkmalen des Anspruchs 1 gelöst.

Erfindungsgemäß ist zwischen der Haushaltsgerätetür und der Möbelfrontplatte eine Dämpfungsvorrichtung vorgesehen, die mit der Haushaltsgerätetür und der Möbelfrontplatte in Wirkverbindung steht. Die so angeordnete Dämpfungsvorrichtung nutzt die Relativbewegung von Haushaltsgerätetür und Möbelfrontplatte zueinander wirksam für eine Dämpfung der Schließbewegung der Haushaltsgerätetür und der Möbelfrontplatte.

Vorteilhafte Ausgestaltungen der Erfindung sind Gegenstand der Unteransprüche.

Gemäß einer vorteilhaften Ausführungsvariante ist die Dämpfungsvorrichtung als Dämpfungszylinder oder als Federelement ausgebildet. Bei dieser vergleichsweise einfachen und preiswerten Konstruktion wird der Dämpfungszylinder kurz vor Erreichen der Schließlage in einen Anschlag gedrückt mit dem Resultat, dass die Restbewegung in die Schließposition gedämpft ausgeführt wird.

Gemäß einer weiteren Ausführungsvariante ist die Dämpfungsvorrichtung als Hilfseinzugsvorrichtung ausgebildet. Diese Selbsteinzugsvorrichtung besteht insbesondere aus einem Dämpfer, einem in einer Krückstockkurve geführten Mitnehmer, einer Zugfeder und einem Aktivator. Die Selbsteinzugsvorrichtung ist dabei bevorzugt in einer Aussparung in der Frontseite der Haushaltsgerätetür angeordnet, wobei der Dämpfer, der Mitnehmer und die Zugfeder in einem Gehäuse aufgenommen sind und der Aktivator an der der Haushaltsgerätetür zugewandten Seite der Möbelfrontplatte angeordnet ist, wobei der Mitnehmer bei einer Relativbewegung der Haushaltsgerätetür gegenüber der Möbelfrontplatte während der Schließbewegung der Haushaltsgerätetür und der Möbelfrontplatte durch den Aktivator entgegen der Dämpfungskraft des Dämpfers in eine Schließposition verfahrbar ist.

Durch den Einsatz einer solchen Selbsteinzugsvorrichtung als Dämpfungsvorrichtung wird die Haushaltsgerätetür zusätzlich in ihre Schließposition in einer abgedämpften Bewegung gezogen.

Gemäß einer weiteren Ausführungsvariante ist die Dämpfungsvorrichtung quer zur Relativbewegung angeordnet sein, um über eine geeignete Mechanik wie beispielsweise zwei sich berührende schiefe Ebenen die Kräfte der Relativbewegung bis zur Schließposition aufzunehmen.

Gemäß einer nochmals weiteren Ausführungsvariante ist die Dämpfungsvorrichtung als Radialdämpfer ausgebildet, um die lineare Relativbewegung zwischen Haushaltsgerätetür und der Möbelfrontplatte aufzunehmen und zu dämpfen. Dabei kann der Radialdämpfer beispielsweise in der Haushaltsgerätetür oder der Möbelfrontplatte eingebettet und mit einem Zahnrad ausgerüstet sein, wobei das Zahnrad mit einer Zahnstange an der gegenüberliegenden Möbelfrontplatte oder Haushaltsgerätetür für eine Dämpfung in Eingriff steht.

Die Erfindung betrifft ferner einen Möbelkorpus mit einem Haushaltsgerät nach einem der Ansprüche 1 bis 15,

Ausführungsbeispiele der Erfindung sind in den beigefügten Zeichnungen dargestellt und werden im Folgenden näher erläutert. Es zeigen:
- Figur 1: eine schematische perspektivische Darstellung eines in einen Möbelkorpus eingebauten Haushaltsgerätes mit geöffneter Möbelfrontplatte,

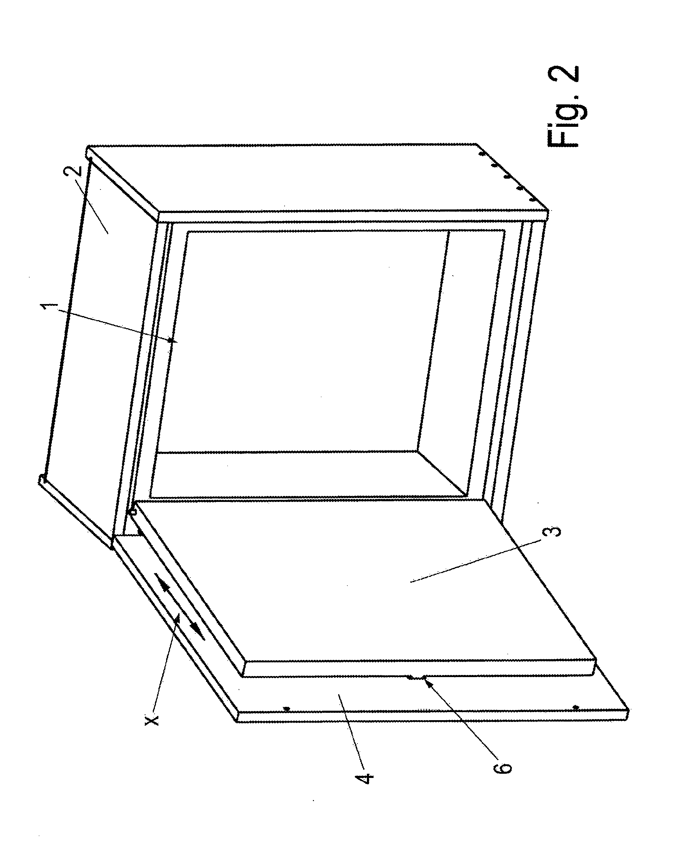

- Figur 2: eine perspektivische Darstellung des eingebauten Haushaltsgerätes mit geöffneter Haushaltsgerätetür,
- Figuren 3 bis 6: das in den Figuren 1 und 2 gezeigte Haushaltsgerät und den Möbelkorpus in einer Draufsicht bei unterschiedlichen Öffnungswinkeln der Haushaltsgerätetür und der Möbelfrontplatte mit einer ersten Ausführungsvariante einer Dämpfungsvorrichtung und
- Figuren 7 bis 11: das Haushaltsgerät und den Möbelkorpus aus den Figuren 1 und 2 in unterschiedlichen Öffnungswinkeln der Hauhaltsgerätetür und der Möbelfrontplatte mit einer zweiten Ausführungsvariante einer Dämpfungsvorrichtung.

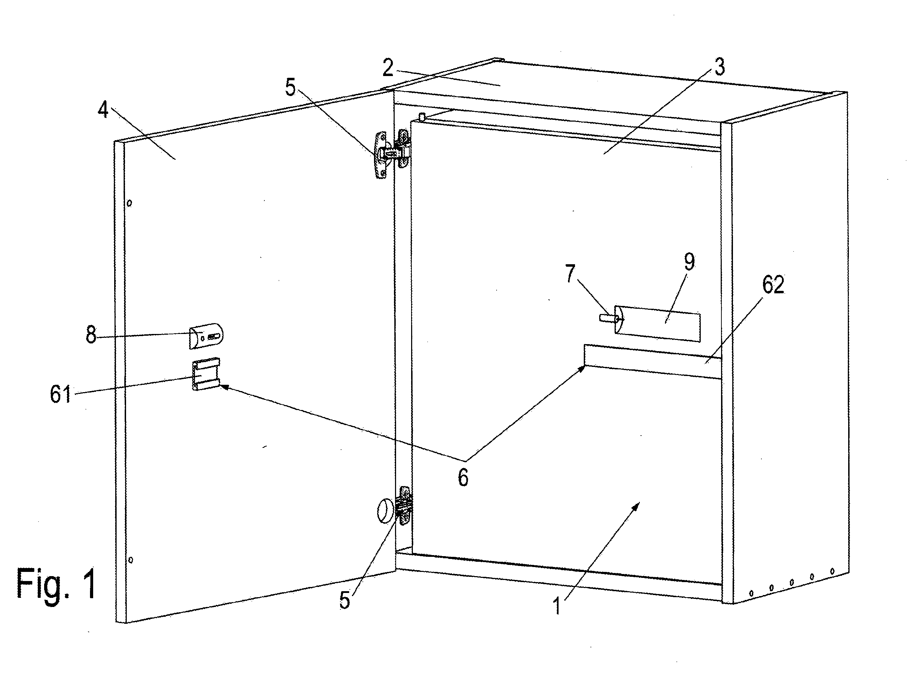

In Figur 1 ist mit dem Bezugszeichen 1 insbesondere ein als Kühlschrank ausgebildetes Haushaltsgerät bezeichnet, das in einem Möbelgehäuse 2 bzw. Möbelkorpus eingebaut ist. In dem Möbelgehäuse 2 ist über Topfscharniere 5 eine Möbelfrontplatte 4 schwenkbar befestigt, die vorzugsweise über ein Schubgelenk 6 mit der Haushaltsgerätetür 3 des Haushaltsgerätes 1 verbunden ist. Auf der der Haushaltsgerätetür 3 zugewandten Innenseite der Möbelfrontplatte 4 ist in dem hier gezeigten Ausführungsbeispiel eine Klammer 61 befestigt, die zusammen mit einem in horizontaler Richtung an der Außenseite der Haushaltsgerätetür 3 befestigten Schiene 62 das Schubgelenk 6 bildet, wobei die Schiene 62 in der Klammer 61 horizontal verschiebbar gehalten ist.

Des weiteren ist an der der Haushaltsgerätetür zugewandten Seite der Möbelfrontplatte 4 ein Anschlag angeordnet, gegen den eine als Dämpfungszylinder 7 ausgebildete Dämpfungsvorrichtung 7, 20 gedrückt wird, wenn die Haushaltsgerätetür 3 und die Möbelfrontplatte 4 von einer Öffnungsposition, bei der das Haushaltsgerät geöffnet ist, in eine Schließposition, bei der das Haushaltsgerät geschlossen ist, bewegt wird. Da die Verschwenkung der Haushaltsgerätetür 3 über eine andere Drehachse 10 erfolgt als die der Möbelfrontplatte 4, bewegen sich die Möbelfrontplatte 4 und die Haushaltsgerätetür 3 während dieser Schließbewegung bzw. während einer Öffnungsbewegung annähernd parallel zueinander in horizontaler Richtung. Dieser Gleitweg zwischen den beiden Türen wird dabei zur Dämpfung der Schließbewegung ausgenutzt.

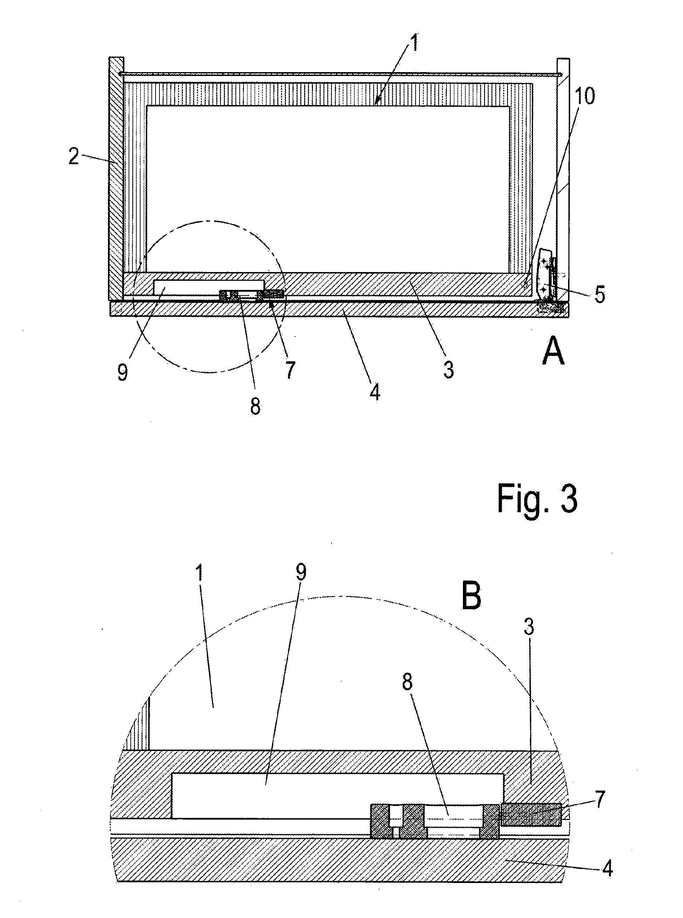

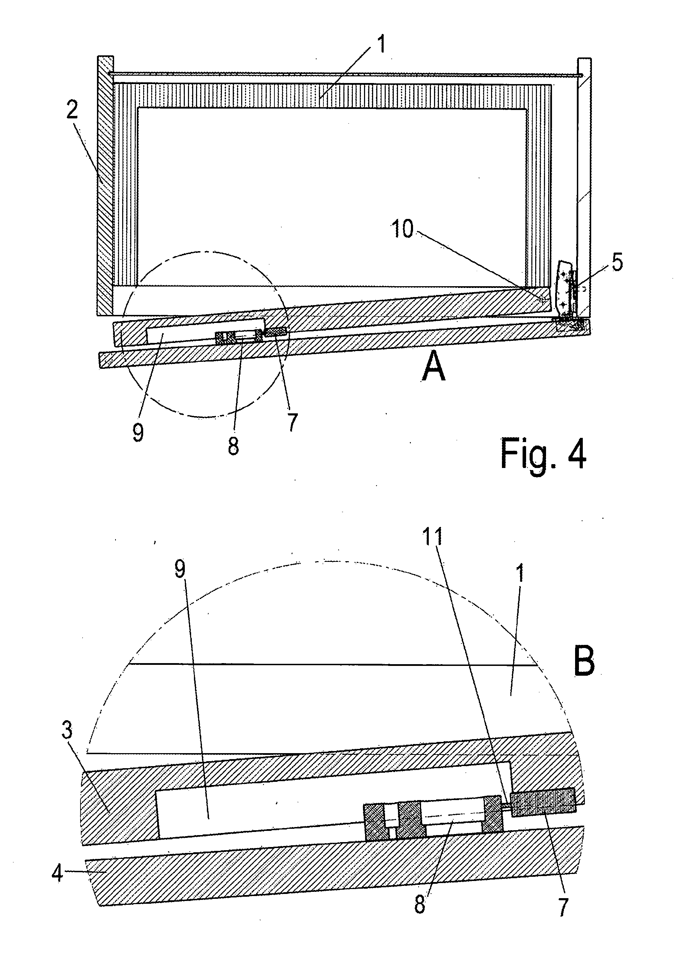

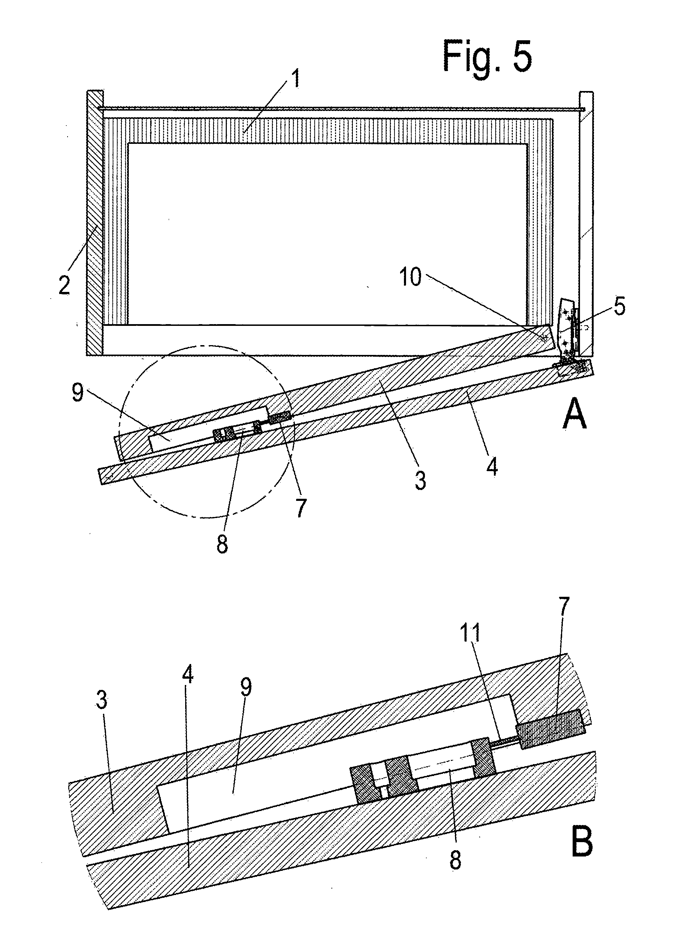

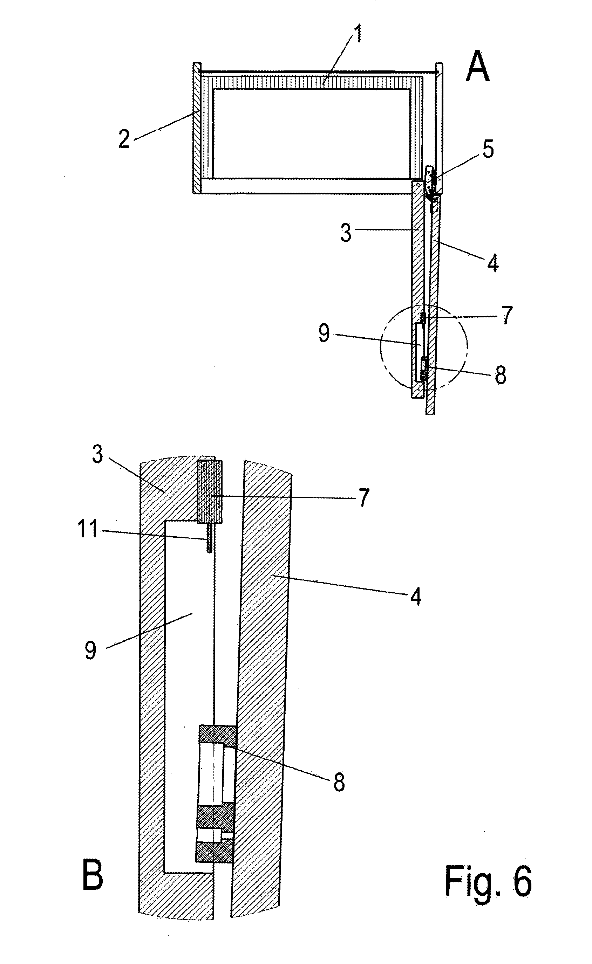

Der Dämpfungszylinder 7 ist dabei in dem Zwischenraum zwischen der Haushaltsgerätetür 3 und der Möbelfrontplatte 4 angeordnet. Um den Abstand zwischen Haushaltsgerätetür 3 und Möbelfrontplatte 4 möglichst gering zu halten, ist in der hier gezeigten Ausführungsvariante an der Außenseite der Haushaltsgerätetür 3 eine Aussparung 9 vorgesehen, in der die Dämpfungsvorrichtung 7 angeordnet ist. Die Aussparung 9 ist hier als Langloch ausgebildet, wobei die Länge des Langlochs so bemessen ist, dass der Anschlag 8 bei jedem Öffnungswinkel der Tür 3 bzw. Möbelfrontplatte 4 in dem Langloch einliegt. Der Anschlag und die Dämpfungsvorrichtung 7 sind dabei derart zueinander positioniert, dass eine Schließbewegung der Haushaltsgerätetür 3 und der Möbelfrontplatte 4 kurz vor Erreichen der endgültigen Schließposition abdämpfbar ist. Dazu drückt, wie in den Figuren 3 bis 6 gezeigt, der Anschlag 8 einen Dämpferkolben 11 in der Schließposition der Haushaltsgerätetür 3 und der Möbelfröntplatte 4 vollständig in den Dämpfungszylinder 7 ein. Mit zunehmendem Öffnungswinkel steht der Dämpferkolben 11 weiter aus dem Dämpfungszylinder heraus, bis eine Position erreicht ist, bei der der Anschlag 8 mit der Dämpfungsvorrichtung 7 nicht mehr in Kontakt ist. Das Herausbewegen des Dämpferkolbens 11 kann beispielsweise durch eine im Dämpfungszylinder angeordnete und mit dem Dämpfungskolben in Wirkverbindung stehende Druckfeder bewirkt werden. Alternativ kann das Herausdrücken des Dämpferkolbens 11 auch pneumatisch erfolgen. Soll das Haushaltsgerät 1 wieder geschlossen werden, so tritt der Anschlag 8 mit dem Kolben 11 des Dämpfungszylinders 7 ab einem bestimmten Öffnungswinkel, vorzugsweise bei einem Öffnungswinkel zwischen 10 und 20°, in Kontakt, so dass die Restbewegung der Haushaltsgerätetür 3 und der Möbelfrontplatte 4 durch die Dämpfungskraft des Dämpfungszylinders 7 abgedämpft wird.

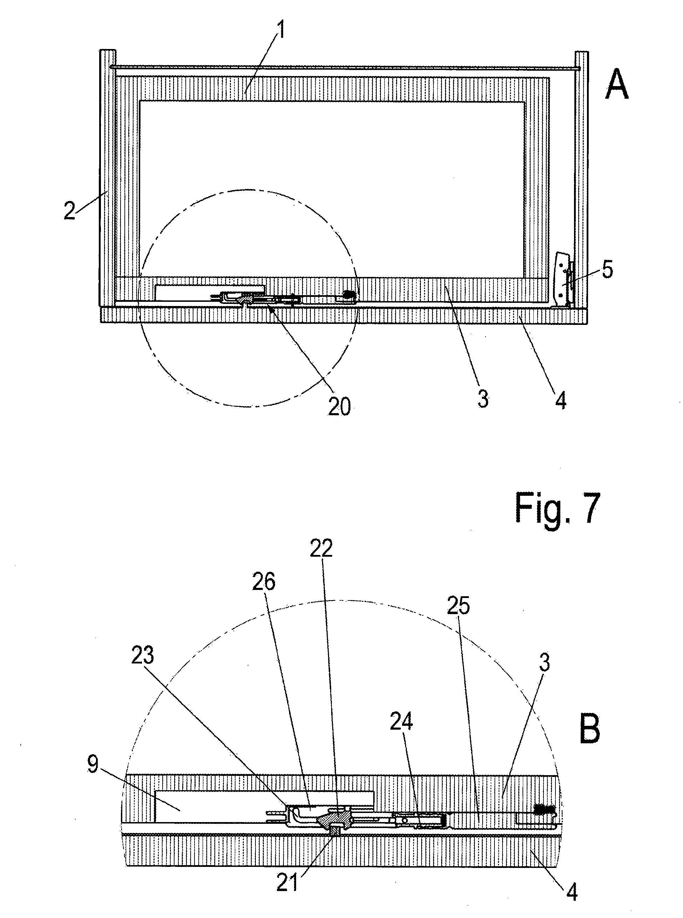

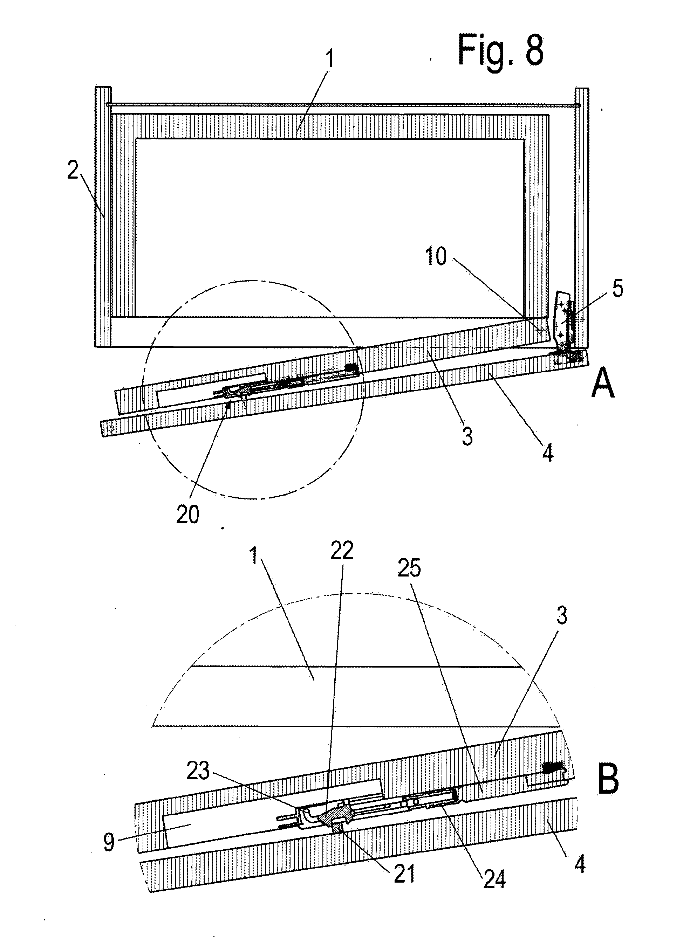

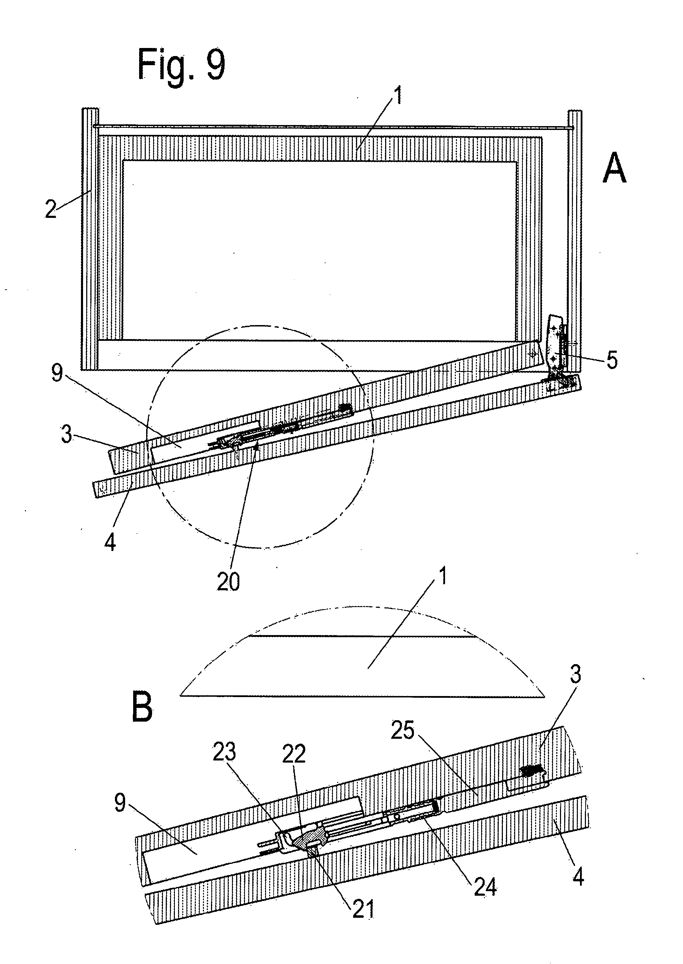

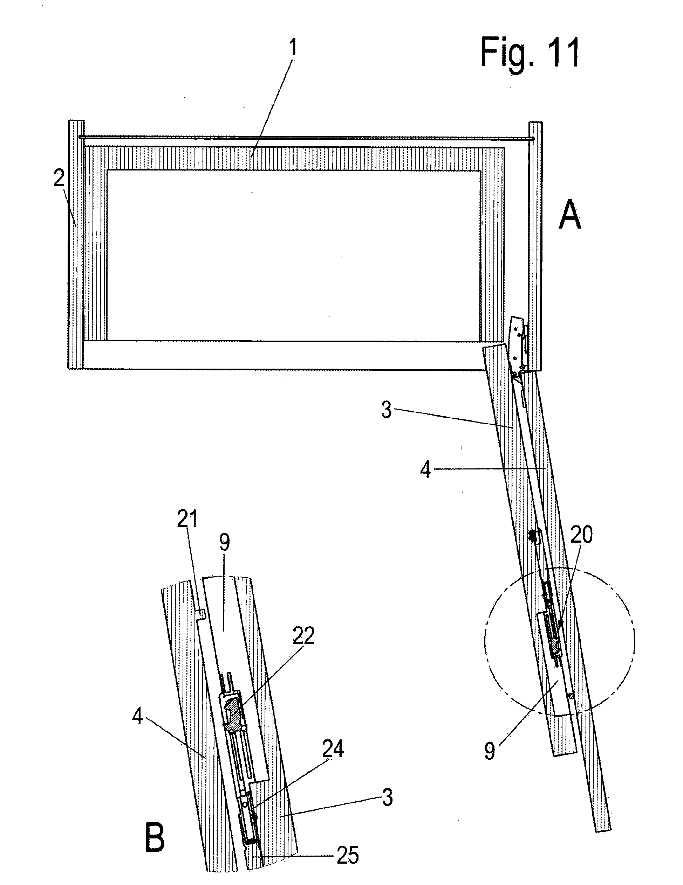

In einer in den Figuren 7-11 gezeigten Ausführungsvariante ist die Dämpfungsvorrichtung als Selbsteinzugsvorrichtung 20 ausgebildet. Die Selbsteinzugsvorrichtung 20 besteht dabei, wie beispielsweise in Figur 7b gezeigt ist, aus einem Dämpfer 25, einem in einer Krückstockkurve 23 geführten Mitnehmer 22, einer Zugfeder 24 und einem Aktivator 21, der den Mitnehmer 22 in der Krückstockkurve 23 belegt. Dazu ist bevorzugt die Selbsteinzugsvorrichtung 20 in einer Aussparung 9 in der Frontseite der Haushaltsgerätetür 3 angeordnet. Der Dämpfer 25, der Mitnehmer 22 und die Zugfeder 24 sind hier in einem Gehäuse 26 aufgenommen und der Aktivator 21 ist an der der Haushaltsgerätetür 3 zugewandten Seite der Möbelfrontplatte 4 angeordnet, wobei der Mitnehmer 22 bei einer Relativbewegung der Haushaltsgerätetür 3 gegenüber der Möbelfrontplatte 4 während einer Schließbewegung der Haushaltsgerätetür 3 und der Möbelfrontplatte 4 durch den Aktivator 21 entgegen der Dämpfungskraft des Dämpfers 25 in die Schließposition verfahrbar ist. Die Schließposition ist dabei in Figur 7a und 7b gezeigt. Eine Anordnung der Dämpfungsvorrichtung 20 an der Möbelfrontplatte 4 und des Aktivators 21 an der Haushaltsgerätetür 3 ist natürlich ebenfalls denkbar.

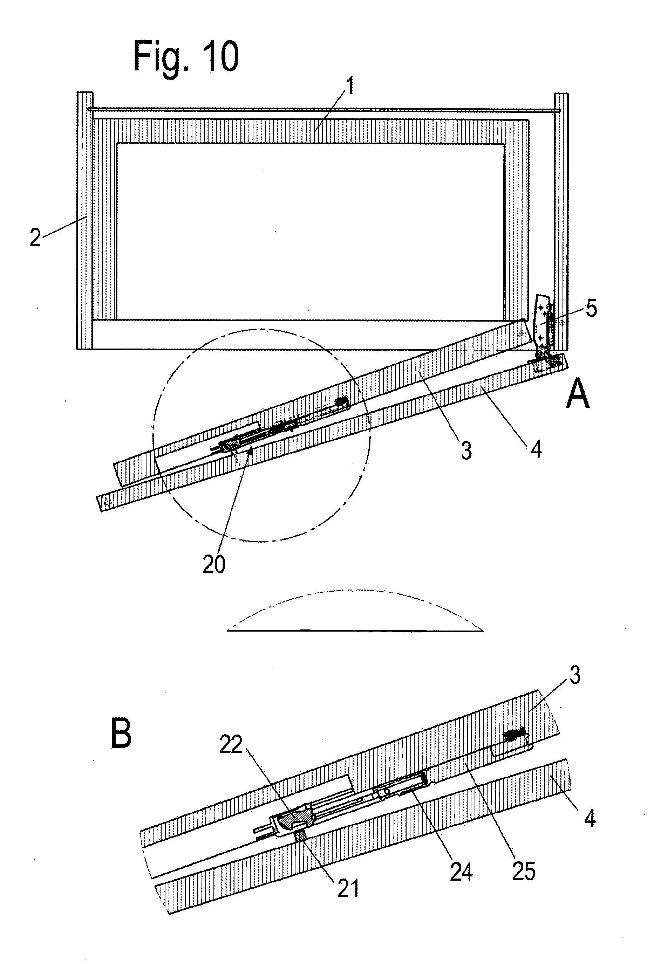

Wie in den Figuren 7-11 gezeigten Darstellungen der Haushaltsgerätetür 3 und der Möbelfrontplatte 4 bei unterschiedlichen Öffnungswinkeln gegenüber dem Haushaltsgerät 1 zu sehen ist, wird während des Türschließens der Aktivator 21 an den Mitnehmer 22 herangeführt (siehe Figur 10b), wobei der Mitnehmer 22 sich in dem abgeknickten Ende der Krückstockkurve 23 befindet. Während der weiteren Schließbewegung verankert sich der Mitnehmer 22 mit dem Aktivator 21 und drückt bei der Weiterbewegung in die Schließposition einen Kolben eines Dämpferkolbens 25 in den Dämpferkolben hinein, so dass die Restbewegung in die Schließposition gedämpft erfolgt. Wird die hier als Kühlschranktür ausgebildete Haushaltsgerätetür 3 anschließend geöffnet, zieht der Aktivator 21 den Mitnehmer 22 und damit den Dämpferkolben aus dem Dämpfer 25 heraus, bis der Mitnehmer 22 wieder in der Krückstockkurve 23 in das Endstück der Krückstockkurve 23 abtaucht und so den Aktivator 21 freigibt.

Die Dämpfungsvorrichtung kann gemäß einer weiteren Ausführungsvariante auch quer zur Relativbewegung angeordnet sein, um über eine geeignete Mechanik wie beispielsweise zwei sich berührende schiefe Ebenen die Kräfte der Relativbewegung bis zur Schließposition aufzunehmen.

In einer weiteren Ausführungsvariante ist die Dämpfungsvorrichtung als Radialdämpfer ausgebildet, um die lineare Relativbewegung zwischen Haushaltsgerätetür 3und der Möbelfrontplatte 4 aufzunehmen und zu dämpfen. Dabei kann der Radialdämpfer beispielsweise in der Haushaltsgerätetür 3 oder der Möbelfrontplatte 4 eingebettet und mit einem Zahnrad ausgerüstet sein, wobei das Zahnrad mit einer Zahnstange an der gegenüberliegenden Möbelfrontplatte 4 oder Haushaltsgerätetür3 für eine Dämpfung in Eingriff steht.

### Bezugszeichenliste

- Haushaltsgerät: 1
- Möbelgehäuse: 2
- Haushaltsgerätetür: 3
- Möbelfrontplatte: 4
- Topfscharnier: 5
- Schubgelenk: 6
- Dämpfungszylinder: 7
- Anschlag: 8
- Aussparung: 9
- Drehachse: 10
- Dämpferkolben: 11
- Dämpfungsvorrichtung: 20
- Aktivator: 21
- Mitnehmer: 22
- Krückstockkurve: 23
- Zugfeder: 24
- Dämpfer: 25
- Gehäuse: 26

- Klammer: 61
- Schiene: 62

## Patentansprüche

1. In einen Möbelkorpus (2) einbaubares Haushaltsgerät (1), insbesondere Kühlschrank, mit einer frontseitig an der Haushaltsgerätetür (3) angeordneten und mit mindestens einem Drehgelenk (5) versehenen Möbelfrontplatte (4), die mit der Frontseite der Haushaltsgerätetür (3) verbunden ist, wobei zwischen der Haushaltsgerätetür (3) und der Möbelfrontplatte (4) eine Dämpfungsvorrichtung (7, 20) vorgesehen ist, die mit der Haushaltsgerätetür (3) und der Möbelfrontplatte (4) in Wirkverbindung steht, wobei die Haushaltsgerätetür (3) als sich während des Öffnens und Schließens relativ zur Möbelfrontplatte (4) bewegende Schlepptür ausgebildet ist, **dadurch gekennzeichnet, dass** die Dämpfungsvorrichtung (7, 20) als die Haushaltsgerätetür in ihre Schließposition in einer abgedämpften Bewegung ziehende, die Relativbewegung von Haushaltsgerätetür (3) und Möbelfrontplatte (4) zueinander nutzende Selbsteinzugsvorrichtung (20) ausgebildet ist.

2. Haushaltsgerät (1) nach Anspruch 1, **dadurch gekennzeichnet, dass** die Selbsteinzugsvorrichtung (20) einen Dämpfer (25), einen in einer Krückstockkurve (23) geführten Mitnehmer (22), eine Zugfeder (24) und einen Aktivator (21) aufweist.

3. Haushaltsgerät (1) nach Anspruch 2, **dadurch gekennzeichnet, dass** die Selbsteinzugsvorrichtung (20) in einer Aussparung (9) in der Frontseite der Haushaltsgerätetür (3) angeordnet ist, wobei der Dämpfer (25), der Mitnehmer (22) und die Zugfeder (24) in einem Gehäuse (26) aufgenommen sind und der Aktivator (21) an der der Haushaltsgerätetür (3) zugewandten Seite der Möbelfrontplatte (4) angeordnet ist, wobei der Mitnehmer (22) bei einer Relativbewegung der Haushaltsgerätetür (3) gegenüber der Möbelfrontplatte (4) während der Schließbewegung der Haushaltsgerätetür (3) und der Möbelfrontplatte (4) durch den Aktivator (21) entgegen der Dämpfungskraft des Dämpfers (25) in eine Schließposition verfahrbar ist.

4. Haushaltsgerät (1) nach dem Oberbegriff des Anspruchs 1, **dadurch gekennzeichnet, dass** die Dämpfungsvorrichtung (7, 20) als Dämpfungszylinder oder Federelement ausgebildet ist, wobei die Dämpfungsvorrichtung (7) in einer Aussparung (9) in der Frontseite der Haushaltsgerätetür (3) angeordnet ist, wobei die Dämpfungsvorrichtung (7) bei einer Relativbewegung der Haushaltsgerätetür (3) gegenüber der Möbelfrontplatte (4) gegen einen an der der Haushaltsgerätetür (3) zugewandten Seite der Möbelfrontplatte (4) angeordneten Anschlag (8) bewegbar ist.

5. Haushaltsgerät (1) nach Anspruch 4, **dadurch gekennzeichnet, dass** die Aussparung (9) als Langloch ausgebildet ist, in der der Anschlag (8) im montierten Zustand der Möbelfrontplatte (4) an der Haushaltsgerätetür (3) einliegt.

6. Haushaltsgerät (1) nach Anspruch 4 oder 5, **dadurch gekennzeichnet, dass** der Anschlag (8) und die Dämpfungsvorrichtung (7) derart zueinander positioniert sind, dass eine Schließbewegung der Haushaltsgerätetür (3) und der Möbelfrontplatte (4) kurz vor Erreichen der endgültigen Schließposition abdämpfbar ist.

7. Haushaltsgerät (1) nach dem Oberbegriff des Anspruchs 1, **dadurch gekennzeichnet, dass** die Dämpfungsvorrichtung (7, 20) quer zur Relativbewegung der Haushaltsgerätetür (3) gegenüber der Möbelfrontplatte (4) an der Haushaltsgerätetür (3) oder der Möbelfrontplatte (4) angeordnet ist.

8. Haushaltsgerät (1) nach Anspruch 7, **dadurch gekennzeichnet, dass** die Dämpfungsvorrichtung (7, 20) zwei sich einander berührende schiefe Ebenen aufweist, wobei die Relativbewegung der Haushaltsgerätetür (3) gegenüber der Möbelfrontplatte (4) durch die Reibung zwischen den schiefen Ebenen abdämpfbar ist.

9. Haushaltsgerät (1) nach dem Oberbegriff des Anspruchs 1, **dadurch gekennzeichnet, dass** die Dämpfungsvorrichtung (7, 20) als in der Haushaltsgerätetür oder der Möbelfrontplatte eingebetteter Radialdämpfer ausgebildet ist.

10. Haushaltsgerät (1) nach Anspruch 9, **dadurch gekennzeichnet, dass** der Radialdämpfer mit einem Zahnrad versehen ist, das mit einer Zahnstange an der gegenüberliegenden Möbelfrontplatte oder Haushaltsgerätetür in Eingriff steht.

11. Haushaltsgerät (1) nach einem der vorstehenden Ansprüche, **dadurch gekennzeichnet, dass** die Möbelfrontplatte (4) und die Frontseite der Haushaltsgerätetür über ein Schubgelenk (6) miteinander verbunden sind.

12. Haushaltsgerät (1) nach Anspruch 11, **dadurch gekennzeichnet, dass** die Dämpfungsvorrichtung (7, 20) mit dem Schubgelenk (6) in Wirkverbindung steht.

## Claims

1. Domestic appliance (1), in particular refrigerator, which can be integrated into a basic furniture structure (2) and has a furniture front panel (4) which is arranged on the front face of the domestic appliance door (3) and is provided with at least one rotary joint (5) and is connected to the front face of the domestic appliance door (3), wherein a damping apparatus (7, 20) is provided between the domestic appliance door (3) and the furniture front panel (4), the said damping apparatus being operatively connected to the domestic appliance door (3) and the furniture front panel (4), wherein the domestic appliance door (3) is in the form of a sliding door which moves relative to the furniture front panel (4) during opening and closing, **characterized in that** the damping apparatus (7, 20) is in the form of a self-retracting apparatus (20) which pulls the domestic appliance door into its closed position with a damped movement and makes use of the relative movement of the domestic appliance door (3) and the furniture front panel (4) in relation to one another.

2. Domestic appliance (1) according to Claim 1, **characterized in that** the self-retracting apparatus (20) has a damper (25), a driver (22) which is guided in a walking stick-shaped curve (23), a tension spring (24) and an activator (21).

3. Domestic appliance (1) according to Claim 2, **characterized in that** the self-retracting apparatus (20) is arranged in a cutout (9) in the front face of the domestic appliance door (3), wherein the damper (25), the driver (22) and the tension spring (24) are accommodated in a housing (26), and the activator (21) is arranged on that side of the furniture front panel (4) which faces the domestic appliance door (3), wherein the driver (22) can be moved to a closed position, against the damping force of the damper (25), by the activator (21) in the event of a relative movement of the domestic appliance door (3) in relation to the furniture front panel (4) during the closing movement of the domestic appliance door (3) and the furniture front panel (4).

4. Domestic appliance (1) according to the preamble of Claim 1, **characterized in that** the damping apparatus (7, 20) is in the form of a damping cylinder or spring element, wherein the damping apparatus (7) is arranged in a cutout (9) in the front face of the domestic appliance door (3), wherein the damping apparatus (7) can be moved against a stop (8), which is arranged on that face of the furniture front panel (4) which faces the domestic appliance door (3), in the event of a relative movement of the domestic appliance door (3) in relation to the furniture front panel (4).

5. Domestic appliance (1) according to Claim 4, **characterized in that** the cutout (9) is in the form of an elongate hole in which the stop (8) is situated in the mounted state of the furniture front panel (4) on the domestic appliance door (3).

6. Domestic appliance (1) according to Claim 4 or 5, **characterized in that** the stop (8) and the damping apparatus (7) are positioned in relation to one another in such a way that a closing movement of the domestic appliance door (3) and of the furniture front panel (4) can be damped shortly before reaching the final closed position.

7. Domestic appliance (1) according to the preamble of Claim 1, **characterized in that** the damping apparatus (7, 20) is arranged on the domestic appliance door (3) or the furniture front panel (4) transverse to the relative movement of the domestic appliance door (3) in relation to the furniture front panel (4).

8. Domestic appliance (1) according to Claim 7, **characterized in that** the damping apparatus (7, 20) has two inclined planes which touch one another, wherein the relative movement of the domestic appliance door (3) in relation to the furniture front panel (4) can be damped by the friction between the inclined planes.

9. Domestic appliance (1) according to the preamble of Claim 1, **characterized in that** the damping apparatus (7, 20) is in the form of a radial damper which is embedded in the domestic appliance door or the furniture front panel.

10. Domestic appliance (1) according to Claim 9, **characterized in that** the radial damper is provided with a gear wheel which engages with a toothed rack on the opposite furniture front plate or domestic appliance door.

11. Domestic appliance (1) according to one of the preceding claims, **characterized in that** the furniture front panel (4) and the front face of the domestic appliance door are connected to one another by means of a sliding joint (6).

12. Domestic appliance (1) according to Claim 11, **characterized in that** the damping apparatus (7, 20) is operatively connected to the sliding joint (6).

## Revendications

1. Appareil électroménager (1) pouvant être encastré dans un corps de meuble (2), en particulier réfrigérateur, comprenant un panneau frontal de meuble (4) disposé côté frontal au niveau de la porte d'appareil électroménager (3) et pourvu d'au moins une articulation à charnière (5), ledit panneau frontal de meuble étant relié au côté frontal de la porte d'appareil électroménager (3), sachant qu'est prévu, entre la porte d'appareil électroménager (3) et le panneau frontal de meuble (4), un dispositif d'amortissement (7, 20), qui est en liaison fonctionnelle avec la porte d'appareil électroménager (3) et le panneau frontal de meuble (4), sachant que la porte d'appareil électroménager (3) est réalisée sous la forme d'une porte basculante se déplaçant par rapport au panneau frontal de meuble (4) lors de l'ouverture et de la fermeture, **caractérisé en ce que** le dispositif d'amortissement (7, 20) est réalisé sous la forme d'un dispositif rétractable automatique (20) amenant par traction la porte d'appareil électroménager dans sa position fermée lors d'un déplacement amorti, utilisant le déplacement relatif de la porte d'appareil électroménager (3) et du panneau frontal de meuble (4) l'un par rapport à l'autre.

2. Appareil électroménager (1) selon la revendication 1, **caractérisé en ce que** le dispositif de rétraction automatique (20) présente un système amortisseur (25), un entraîneur (22) guidé dans une came sous forme de béquille (23), un ressort de traction (24) et un actionneur (21).

3. Appareil électroménager (1) selon la revendication 2, **caractérisé en ce que** le dispositif de rétraction automatique (20) est disposé dans un évidement (9) dans le côté frontal de la porte d'appareil électroménager (3), sachant que le système amortisseur (25), l'entraîneur (22) et le ressort de traction (24) sont logés dans un boîtier (26), et **en ce que** l'actionneur (21) est disposé au niveau du côté, tourné vers la porte d'appareil électroménager (3), du panneau frontal de meuble (4), sachant que l'entraîneur (22) peut être déplacé dans une position fermée, lorsque la porte d'appareil électroménager (3) effectue un déplacement relatif par rapport au panneau frontal de meuble (4), au cours du déplacement de fermeture de la porte d'appareil électroménager (3) et du panneau frontal de meuble (4), par l'actionneur (21) à l'encontre de la force d'amortissement du système amortisseur (25).

4. Appareil électroménager (1) selon le préambule de la revendication 1, **caractérisé en ce que** le dispositif d'amortissement (7, 20) est réalisé sous la forme d'un cylindre d'amortissement ou d'un élément formant un ressort, sachant que le dispositif d'amortissement (7) est disposé dans un évidement (9) dans le côté frontal de la porte d'appareil électroménager (3), sachant que le dispositif d'amortissement (7) peut être déplacé, lorsque la porte d'appareil électroménager (3) effectue un déplacement relatif par rapport au panneau frontal de meuble (4), contre une butée (8) disposée au niveau du côté, tourné vers la porte d'appareil électroménager (3), du panneau frontal de meuble (4).

5. Appareil électroménager (1) selon la revendication 4, **caractérisé en ce que** l'évidement (9) est réalisé sous la forme d'un trou oblong, dans lequel la butée (8) est disposée lorsque le panneau frontal de meuble (4) est monté au niveau de la porte d'appareil électroménager (3).

6. Appareil électroménager (1) selon la revendication 4 ou 5, **caractérisé en ce que** la butée (8) et le dispositif d'amortissement (7) sont positionnés l'un par rapport à l'autre de telle manière qu'un déplacement de fermeture de la porte d'appareil électroménager (3) et du panneau frontal de meuble (4) peut être amorti juste avant que la position de fermeture finale soit atteinte.

7. Appareil électroménager (1) selon le préambule de la revendication 1, **caractérisé en ce que** le dispositif d'amortissement (7, 20) est disposé, de manière transversale par rapport au déplacement relatif de la porte d'appareil électroménager (3) par rapport au panneau frontal de meuble (4), au niveau de la porte d'appareil électroménager (3) ou au niveau du panneau frontal de meuble (4).

8. Appareil électroménager (1) selon la revendication 7, **caractérisé en ce que** le dispositif d'amortissement (7, 20) présente deux plans obliques en contact l'un avec l'autre, sachant que le déplacement relatif de la porte d'appareil électroménager (3) par rapport au panneau frontal de meuble (4) peut être amorti par le frottement entre les deux plans obliques.

9. Appareil électroménager (1) selon le préambule de la revendication 1, **caractérisé en ce que** le dispositif d'amortissement (7, 20) est réalisé sous la forme d'un système amortisseur radial intégré dans la porte d'appareil électroménager ou dans le panneau frontal de meuble.

10. Appareil électroménager (1) selon la revendication 9, **caractérisé en ce que** le système amortisseur radial est pourvu d'une roue dentée, qui se trouve en prise avec une crémaillère au niveau du panneau frontal de meuble ou au niveau de la porte d'appareil électroménager situé(e) en regard.

11. Appareil électroménager (1) selon l'une quelconque des revendications précédentes, **caractérisé en ce que** le panneau frontal de meuble (4) et le côté frontal de la porte d'appareil électroménager sont reliés l'un à l'autre par l'intermédiaire d'une articulation à glissières (6).

12. Appareil électroménager (1) selon la revendication 11, **caractérisé en ce que** le dispositif d'amortissement (7, 20) est en liaison fonctionnelle avec l'articulation à glissières (6).
